# EUROPEAN PATENT SPECIFICATION

(11) **EP 3 592 279 B1**
(45) Date of publication and mention of the grant of the patent: **25.11.2020**
(21) Application number: 18712672.7
(22) Date of filing: 09.03.2018
(51) Int. Cl.: A61C 3/025

(54) **POWDER CLEANER FOR DENTAL USE**
PULVERREINIGER ZUR DENTALEN VERWENDUNG
DISPOSITIF DE NETTOYAGE À POUDRE POUR UTILISATION DENTAIRE

(30) Priority: 10.03.2017 IT 201700026895
(43) Date of publication of application: 15.01.2020
(73) Proprietor: Mectron S.p.A., 16042 Carasco GE (IT)
(72) Inventor: GIACHERO, Davide, 16149 Genova (IT); STUPPINI, Maurizio, 16040 Ne GE (IT); VERCELLOTTI, Domenico, 16039 Sestri Levante GE (IT)
(74) Representative: Papa, Elisabetta
(86) International application number: PCT/IB2018/051551
(87) International publication number: WO 2018/163117

(56) References cited:
- JP-A- H11 104 149
- US-A- 4 118 866
- US-B1- 6 485 303

## Description

### Technical field of the invention

The present invention relates to a powder cleaner for dental use, in particular of the type which dispenses a mixture under pressure of air and abrasive powder, typically together with a jet of water.

### Background

Powder cleaners are typically used in dentistry to remove tartar during dental hygiene. They are also used for the finishing of dental surfaces subsequent, for example, to a partial removal, or prosthetic operation.

Such cleaners perform precisely a superficial removal of material by dispensing a jet under pressure of air and abrasive powder. In general, the same instrument also administers a flow of water through a channel separate from that of the air and having a dispensing outlet adjacent or externally concentric to that of the air.

Known powder cleaners are in the form of a handpiece which can be grasped by an operator and can be connected to the sources or connections of compressed air and water generally present in dental laboratories. A commonly used type of device comprises a pair of oblong arms, in particular a proximal one with respect to the operator, which houses the connections for the above air and water connections, and a distal one which terminates with the dispensing outlets on the patient. Between these arms there is an intermediate chamber, generally spherical, which has an upper access to allow the loading of the powder therein.

The compressed air is conveyed into the above intermediate chamber, inside which a turbulence is generated which causes the air to be mixed with the powder and then the entrainment of the latter towards the outlet of the chamber in the dispensing direction to the patient.

JP H11 104149-A discloses a known powder-cleaning device for dental use.

One of the drawbacks of prior art cleaners is that each model of them is substantially specific for a type of abrasive powder in terms of mechanical properties and/or dimensions of the latter. In particular, on the market there are powders of various grain sizes, which can range from 120 microns up to 12 microns in diameter, or linear dimension, average of each particle. For optimal mixing and entrainment, each type of powders requires specific fluid-dynamic conditions inside the turbulence chamber which, in the prior art, are obtained for example by modifying the geometry of the chamber itself or by modifying the geometry of the nozzles contained in the chamber.

As a result, as mentioned, the manufacturers of powder cleaners provide different devices to cover the different grain sizes and/or types of powders.

A further drawback is represented by the fact that the intermediate turbulence chamber requires not easy filling modes, for example it must be manually supported during the powder insertion. Consequently, known cleaners often cannot ensure a precise dosage of the powder, nor prevent the dispersion thereof into the environment during the loading operation.

### Summary of the invention

The technical problem posed and solved by the present invention is therefore that of providing a powder-cleaning device for dental use which allows overcoming one or more of the drawbacks mentioned above with reference to the prior art.

This problem is solved by a cleaning device according to claim 1.

Preferred features of the present invention are the subject of the dependent claims. The cleaning device of the invention mainly comprises a proximal arm for attachment to a source of compressed air, a distal arm for dispensing to the patient and an intermediate turbulence chamber, inside which an abrasive powder can be loaded.

The device has a generally handpiece-shaped structure, so that it can be grasped by the operator performing the treatment at the proximal or distal arm.

The cleaning device has a controller of the air flow entering the turbulence chamber, arranged therefore upstream with respect to the mixing process.

In this way, it is possible to use different types of powder, in terms of mechanical properties and size of the granule, in the same device. In fact, the optimal mixing conditions can be obtained precisely by modifying the flow rate of the air entering the chamber and thus the fluid-dynamic parameters of the turbulence generated inside the chamber itself.

Also disclosed is a turbulence chamber having a loading side door, which allows the powder to be inserted along an axis substantially orthogonal to the prevailing extension directions of the two arms.

In this way, the loading operation is extremely simplified and made more efficient, as the handpiece can be placed on a support plane and remain in a position suitable for loading without the need for support by an operator.

Further advantages of the present invention will be apparent from the following detailed description of some embodiments thereof, made by way of a non-limiting example.

### Brief description of the figures

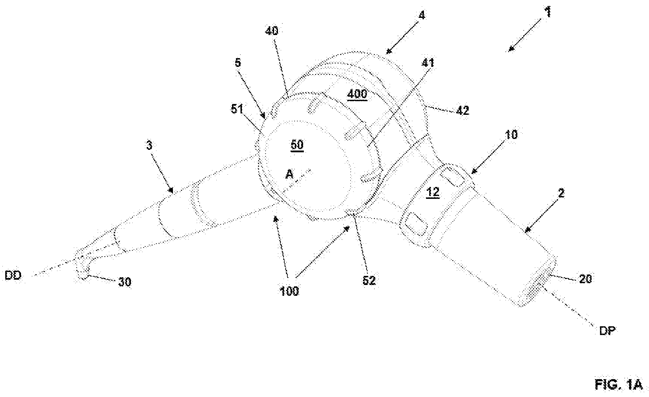

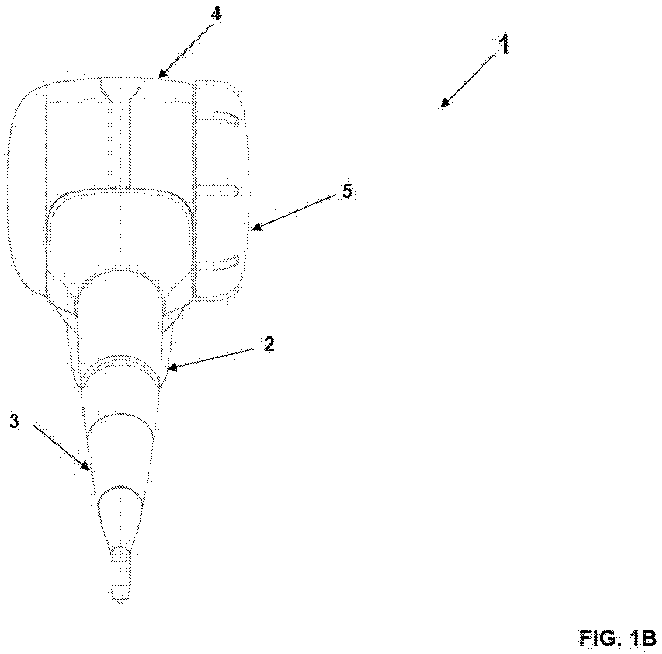

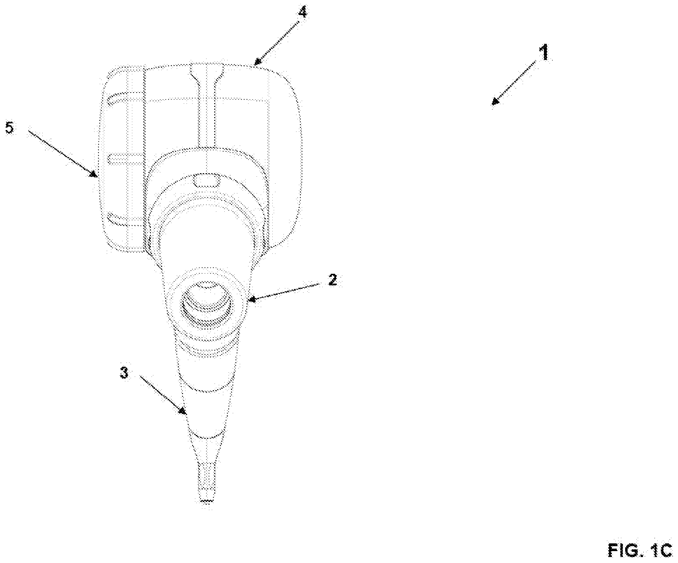

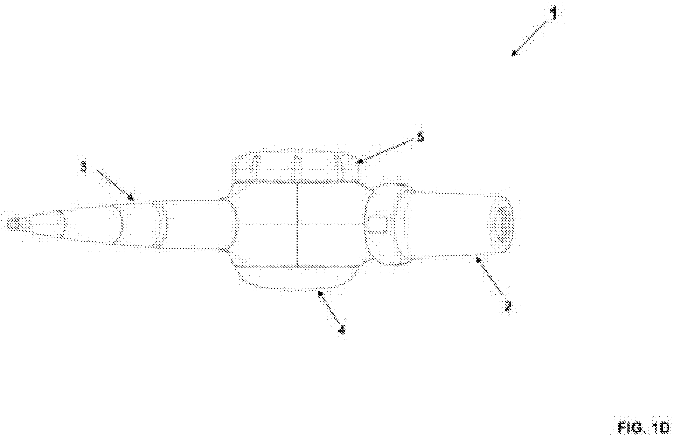

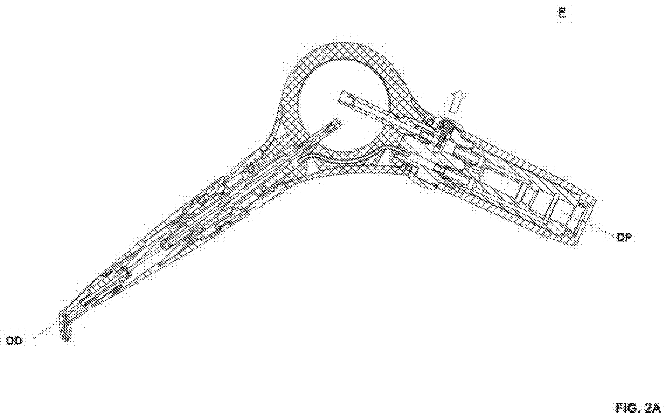

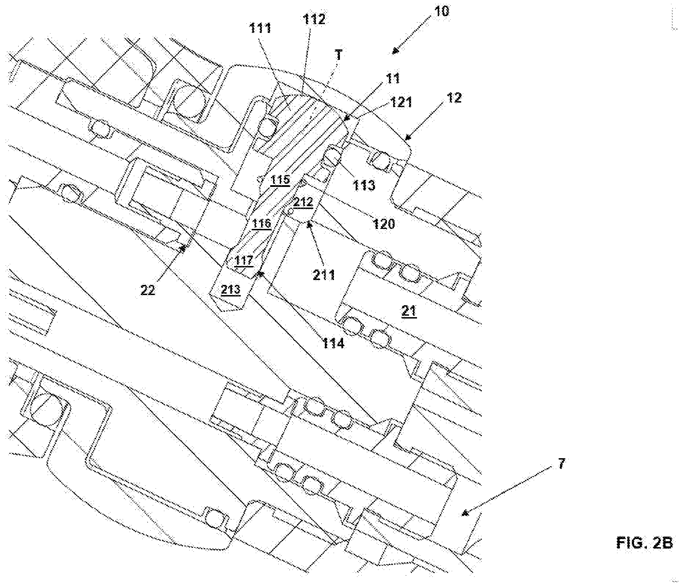

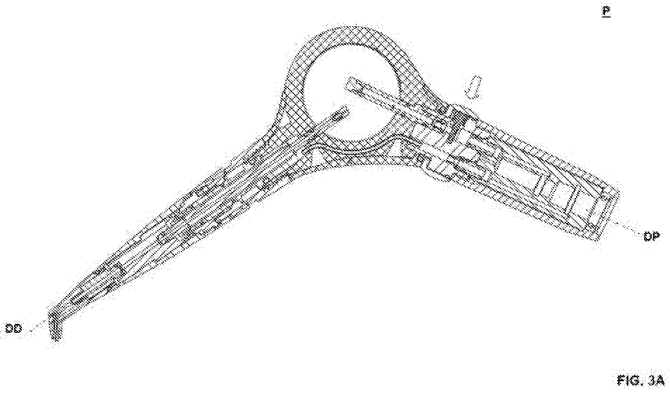

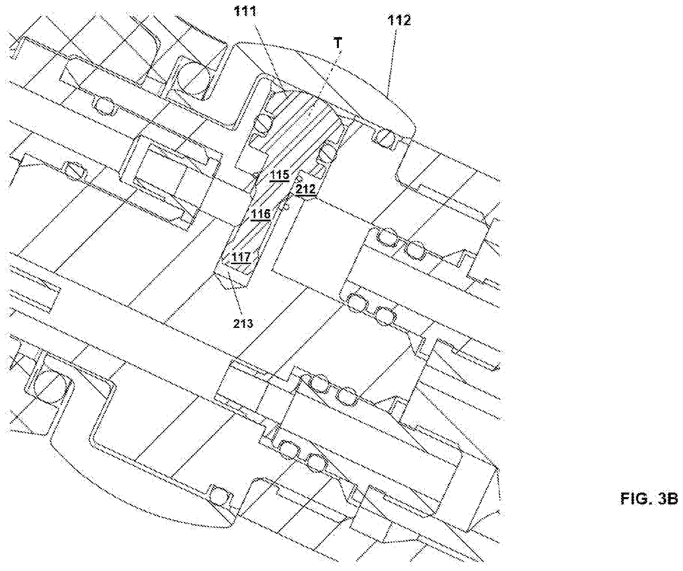

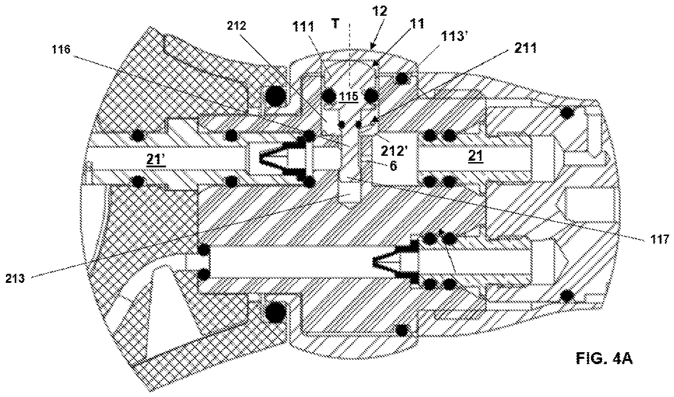

Reference will be made to the figures of the accompanying drawings, in which:
▪ Figure 1A shows a side perspective view of a preferred embodiment of the powder-cleaning device according to the present invention;
▪ Figure 1B shows a front view of the device in Figure 1A;
▪ Figure 1C shows a rear view of the device in Figure 1A;
▪ Figure 1D shows a bottom view of the device in Figure 1A;
▪ Figure 2A shows a longitudinal sectional view of the device in Figure 1A, in an open configuration of a respective control valve;
▪ Figure 2B shows an enlarged detail of Figure 2A;
▪ Figure 3A shows a longitudinal sectional view of the device in Figure 1A, in a closed configuration of a respective control valve;
▪ Figure 3B shows an enlarged detail of Figure 3A;
▪ Figures 4A 4B refer to a preferred embodiment variant of the powder-cleaning device according to the present invention, showing each a partial longitudinal sectional view thereof, in an open and closed configuration, respectively, of a relative control valve.

The dimensions and curves shown in the figures above are to be understood as examples and are not necessarily shown in proportion.

### Detailed description of preferred embodiments

With reference initially to Figures 1A to 1D, a powder-cleaning device according to a preferred embodiment of the invention is denoted as a whole with reference numeral 1. The device 1 is intended for dental use, in particular for dental cleaning aimed at eliminating tartar or for other applications as mentioned above.

Device 1 mainly comprises:
- a first arm 2, which will be defined as proximal in relation to its proximity to the operator;
- a second arm 3 which will be defined as distal;
- a turbulence chamber 4, interposed between the proximal arm 2 and the distal arm 3 and internally in fluid communication with both.

The aforesaid components are defined by an outer casing 100 of the device and by respective inner elements.

The proximal arm 2 is configured for attachment to a source of compressed air, in particular by means of a proximal connection 20 of a per se known type and based, for example, on a screw coupling. The proximal arm 2 has an oblong conformation and extends according to a first prevailing direction DP.

The distal arm 3 also has an oblong conformation and extends according to a second prevailing direction DD which, in the present example, is inclined, that is to say angled, with respect to the first direction DP.

The distal arm 3 has a distally end portion 30 shaped as a spout or dispensing nozzle and configured for dispensing a mixture of air and powder to a patient, according to modes that will be described hereinafter. Preferably, the end portion 30 is inclined with respect to the second prevailing extension direction DD.

In the present embodiment example, as will be explained below, a jet of water is also dispensed through the distal portion 30.

Device 1 is generally configured as a handpiece so as be grasped by an operator at the proximal 2 and/or at the distal arm 3.

The turbulence chamber 4, in this embodiment example, is defined by a lateral skirt 400, preferably with a cylindrical development, closed on both sides by a respective base or wall 41, 42. In the present example, both bases 41 and 42 have a substantially circular profile seen in plan. One or both of these bases 41, 42 may have a dome configuration. In the variant shown, the turbulence chamber 4 has a substantially cylindrical overall shape.

The turbulence chamber 4 has a loading side door 40 configured for insertion of the abrasive powder into the chamber itself. At the loading door 40, the chamber 4 can be closed by means of a port, or door 5, which is preferably removable.

According to the geometry shown, the loading door 40 and the corresponding door 5 substantially occupy the entire base 41, which is therefore defined by the door 5 itself.

In the present example, the door 5 can be opened and closed by means of a screw coupling with the outer casing 100 in the part in which the latter laterally defines the turbulence chamber 4. In the example shown, therefore, the door 5 is rotatable according to an axis of rotation A. In particular, in the present embodiment, the door 5 is made in the form of a unscrewable ring.

The axis A is substantially orthogonal, or at least oblique, with respect to plane P defined by the prevailing development directions DP and DD of the arms 2 and 3. Such a plane P is substantially that of representation of the longitudinal sections of Figures 2A and 3A. The axis A also coincides, in the present example, also with a loading direction of the chamber 4, i.e. of access through the door 40.

In the present embodiment, by virtue of the configuration described, the turbulence chamber 4 can be loaded with the abrasive powder, through the door 40, placing the device 1 resting on the side opposite the door 40 itself, i.e. substantially at the second base or wall 42, and preferably also on arms 2 and 3. Other geometries are possible to obtain the same result, according to which the loading operations can be carried out easily, by a single operator who does not need to manually support the device 1 or to have a dedicated support tool.

Advantageously, the door 5 has a transparent window or portion 50 which allows the operator to view the amount of powder contained inside the chamber 4 and/or the turbulence conditions which are established therein and, in general, to check the local operation of the device 1. In the present example, this transparent window 50 occupies a prevailing area with respect to the plan extension of the door 5 and preferably has a circular profile or in any case corresponding to that of the door 5 itself.

According to a preferred embodiment, the door 5 has a peripheral gripping portion 51, which in the present example is substantially circular ring in shape. The gripping portion 51 can have radial edges or projections 52 with substantially linear development to facilitate gripping and rotation.

The door 5, particularly when in the form of a ring, can be made of stainless steel.

In an application example, the turbulence chamber 4 can be sized for an internal working pressure equal to about 3 bar, with safety sizing at about 9 bar.

The device 1 of the present embodiment also comprises a flow controller 10, configured to allow a variation of the air flow rate that enters the turbulence chamber 4. The controller 10 is arranged on the proximal arm 2 upstream of the turbulence chamber 4. Advantageously, the controller 10 allows a modulation of said flow rate between a condition of minimum air supply, which preferably corresponds to zero flow, and a condition of maximum air supply.

Figures 2A and 2B refer to a condition of maximum or near maximum flow rate, whereas Figures 3A and 3B to a minimum flow condition, which may be in particular null.

With reference to Figures 2A and 2B, the controller 10 is placed at an air feeding channel 21, which passes through the proximal arm 2 to supply compressed air from the coupling 20 to an inlet of the turbulence chamber 4.

In the present embodiment, the controller 10 comprises a plug or pin 11. The latter has a head 111 and a stem 114.

The head 111 is provided with a shaped end surface 112, in particular with substantially arched profile and even more preferably with spherical geometry. A seal can be provided at the head 111, in particular an O-ring 113, for example received in a seat formed in the head 111 itself.

The stem 114 defines a first oblong portion 115 adjacent the head 111, an intermediate portion 116 of reduced cross section and an end portion 117. The transitions between the first portion 115 and the intermediate portion 116 and between the latter and the end portion 117 are defined by local tapered profiles.

The pin 11 is selectively translatable into a seat 211 of the proximal arm 2 according to a direction T substantially orthogonal to the direction DP and substantially lying on or parallel to the aforesaid plane P. The seat 211 has, in direction T, a first enlarged portion 212 within which the head 111 moves, and a second reduced portion 213 within which the stem 114 moves.

On the stem 114, in the part closest to the head 111, an elastic return element 120 can be associated, in particular a helical spring. The latter is interposed between a abutment surface of the head 111 and a abutment surface of the seat 211, the latter positioned at the transition between the two portions 212 and 213. The element 120 is configured to counteract the action of an actuation element 12 described below, by pushing the pin 11 into a raised position of greater projection from the seat 211.

The pin 11 is actuated in translation by the above actuation element 12 which can be operated by the operator. In particular, the actuation element 12, in the present example, is made in the form of a ring which is rotatably coupled on the outer casing 100 of the device 1. Again in the present example, the actuation element 12 rotates about an axis substantially corresponding to direction DP.

In the arrangement described, the actuation element 12 has a shaped guide surface 121, in particular with a cam profile, which acts in abutment on the head 111, in particular on the shaped surface 112 thereof.

By such a shape coupling, the pin 11 selectively slides into the seat 211 between a position of maximum air supply, or maximum flow, corresponding to Figures 2A and 2B, and a minimum supply position, shown in Figures 3A and 3B. In the maximum or non-zero position (Figure 2B), the intermediate portion 116 of the stem 114 is partially arranged within the enlarged seat 212, allowing the passage of air therethrough, within the reduced seat 213 and then in the portion downstream of channel 21. In other words, the pin 11 is raised towards the outside of the device 1 so as to allow the flow of air coming from the coupling 20 to pass. In the minimum flow position (Figure 3B), the pin 11 is lowered towards the inside of the device 1. In this position, the portion 115 inhibits the passage of air from the enlarged seat 212 within the reduced seat 213, occluding the feeding channel 21.

As said, intermediate positions are provided for reducing the air passage area between the lumen portions of the channel 21 upstream and downstream of the controller 10. The spring 120 ensures a continuous abutment between the two surfaces 112 and 121, ensuring a return motion of the pin 11 in a raised position towards the outside of the device 1.

Upstream and/or downstream of the pin 11, non-return flow control means can be applied on the channel 21, such as a valve 22 suitable for preventing backflow of air towards the coupling 20.

The device 1 also advantageously comprises means for dispensing a jet of water, in particular a channel 7 inside the two arms 2 and 3 and passing through a wall of the turbulence chamber 4. Channel 7 extends between a proximal end configured for attachment to a fluid source and a distal end, arranged at the end portion 30 of the distal arm 3.

In an embodiment variant, the compressed air feeding channel 21 may be made, at least locally, of deformable material, and the flow control obtained, for example, by means of an outer plug or pin which rests on the channel itself.

In use, the cleaning device 1 is connected to the dentist's chair or to a different power supply at the coupling 20 and possibly through a connector per se known.

As said, the turbulence chamber 4 is in fluid communication with both arms 2 and 3, so that the compressed air can be fed into the chamber through the proximal arm 2, with a flow rate managed by the controller 10.

As soon as the compressed air enters the chamber 4, it creates a turbulence which creates a mixture of air and powder which, being at a pressure greater than the ambient pressure, is directed towards the device outlet through the distal arm 3.

Varying the flow rate changes the turbulence inside the chamber 4, thus allowing the use of different types of powder.

Furthermore, the control of the air flow carried out upstream of the turbulence chamber allows the operator to modulate the amount of flow that reaches the patient, without the powder passing through a controlling means and thus avoiding any risk of infiltration or jamming.

The water, as mentioned, is instead directed directly towards the outlet of the device 1. The above handpiece cleaner may also be associated with a control unit selectively connectable thereto for determining, for example, the state thereof, optionally associated with local sensors.

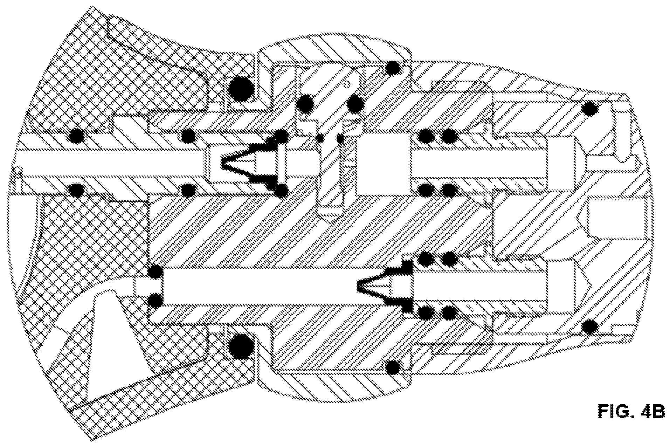

Figures 4A and 4B refer to an embodiment variant of the device of the preceding figures, which will be described hereinafter solely in relation to the differences with what has already been described. In such Figures 4A and 4B, components similar to those already described are denoted with the same numeral reference.

The difference of this embodiment variant relates to the flow rate control modes.

In particular, also in this case the flow controller comprises a plug or pin 11 and an actuation element 12 such as those already described, which cooperate by means of a shape coupling.

In this variant, the stem of pin 11 carries, at the transition between the portions 115 and 116, a further sealing element, such as an O-ring 113'.

In the present variant, at the reduced portion 213 of the seat 211, a hole or passage duct 6 is provided which allows the air coming from the feeding channel 21 to reach the downstream channel, herein denoted by 21', passing precisely through seat 213. This flow is added to that allowed through the passage slot of the enlarged seat 212, the slot herein denoted by 212' and already associated with the embodiment in Figures 2A-3B.

In the open position in Figure 4A, the air arriving from the feeding channel 21 can pass through both the duct 6 and through the slot 212'. In the closed position in Figure 4B, the air can cross only the duct 6 and thus the seat portion 213.

Therefore, the provision of the duct 6 allows an additional possibility of control, or calibration, of the airflow.

Specific implementation methods may also allow an inhibition of passage through duct 6.

The present invention has been described thus far with reference to preferred embodiments thereof. It is understood that other embodiments may exist that relate to the same inventive scope, as defined by the following claims.

## Claims

1. A powder-cleaning device (1) for dental use, comprising:
- a proximal arm (2), configured for attachment to a source of compressed air;
- a distal arm (3), having a distal end portion (30) configured for dispensing a mixture of air and abrasive powder;
- a turbulence chamber (4), configured to receive the abrasive powder, which turbulence chamber (4) is interposed between said proximal arm (2) and said distal arm (3) and in fluid communication with both in such a way that the compressed air can be adducted in the turbulence chamber (4) through said proximal arm (2) and the mixture of air and powder can escape within said distal arm (3);
- a controller (10) for compressed air flow, arranged on said proximal arm (2) upstream of said turbulence chamber (4), which controller (10) comprises:
- a plug or pin (11), which can be selectively translated to occlude a feeding channel (21) of compressed air of said proximal arm (2), and
- an actuation element (12), operable in rotation by an operator,
wherein said actuation element (12) and said plug or pin (11) comprise respective shape-coupling surfaces (112, 121),
wherein said controller (10) allows a modulation of said flow rate between a condition of minimum air supply, which preferably corresponds to zero flow, and a condition of maximum air supply,
which device (1) is configured as a handpiece so as to be grasped by an operator at said proximal (2) and/or distal arm (3).

2. The device (1) according to claim 1, wherein said plug or pin (11) has a head (111) and a stem (114).

3. The device (1) according to claim 1 or 2, wherein said plug or pin (11) and/or said actuation element (12) have a respective shape-coupling surface with a cam or substantially spherical profile.

4. The device (1) according to any one of the preceding claims, wherein said actuation element (12) is made in the shape of a ring which is rotatably coupled on an outer casing (100) of said device (1).

5. The device (1) according to any one of the preceding claims, wherein said actuation element (12) has a shape-coupling surface (121) which forms a shaped guide, in particular with a cam profile, and wherein the configuration is such that said shape-coupling surface (121) acts in abutment on a head (111) of said plug or pin (11), in particular on a shaped surface (112) of said plug or pin (11).

6. The device (1) according to any one of the preceding claims, comprising means for dispensing a jet of water (7), having one or more outlet nozzles at said end portion (30) of said distal arm (3).

7. The device according to any of the preceding claims, wherein said turbulence chamber (4) has a loading side door (40) configured for insertion of the abrasive powder into the chamber itself.

8. The device (1) according to the preceding claim, having a geometry such that said turbulence chamber (4) is loadable with the abrasive powder with the device (1) resting on an opposite side (42) to said loading door (40) and preferably on said proximal (2) and distal (3) arms.

9. The device (1) according to claim 7 or 8, comprising a closing door (5) of said loading side door (40), which closing door (5) is preferably removable.

10. The device (1) according to the preceding claim, wherein said door (5) is openable and closable by means of a screw coupling with an outer casing (100) of the device (1), said door (5) being preferably configured as a ring.

11. The device (1) according to any one of the preceding claims, wherein said proximal (2) and distal (3) arms extend along respective prevailing directions (DP, DD), preferably mutually inclined.

12. The device according to any one of claims 7 to 10 and according to claim 11, wherein said loading side door (40) is configured in such a way that the powder can be inserted according to a loading direction (A) substantially orthogonal to a plane (P) defined by said first (DP) and second (DD) prevailing direction

13. The device (1) according to any one of the preceding claims, wherein said turbulence chamber (4) has a lateral skirt (400), preferably with a cylindrical development, closed on both sides by a respective base or wall (41, 42).

14. The device (1) according to the preceding claim, wherein said turbulence chamber (4) has a substantially overall cylindrical shape.

15. The device (1) according to claim 13 or 14, wherein one or both of said bases or walls (41, 42) have a substantially dome conformation

16. The device (1) according to any of claims 7 to 10 and according to any of claims 11 to 15, wherein said loading side door (40) is formed at one of said bases or walls (41, 42).

17. The device (1) according to any one of the preceding claims, wherein said turbulence chamber (4) comprises a transparent portion (50) configured to allow an operator to see the inside.

## Patentansprüche

1. Pulverreinigungsvorrichtung (1) zur dentalen Verwendung, umfassend:
- einen proximalen Arm (2), der dazu eingerichtet ist, um an einer Druckluftquelle befestigt zu werden;
- einen distalen Arm (3) mit einem distalen Endabschnitt (30), der dazu eingerichtet ist, eine Mischung aus Luft und Schleifpulver auszugeben;
- eine Turbulenzkammer (4), eingerichtet zum Aufnehmen des Schleifpulvers, wobei die Turbulenzkammer (4) zwischen dem proximalen Arm (2) und dem distalen Arm (3) eingefügt ist und derart in Fluidkommunikation mit beiden ist, dass die Druckluft durch den proximalen Arm (2) in die Turbulenzkammer (4) adduziert wird und die Mischung aus Luft und Pulver durch den distalen Arm (3) entweichen kann;
- einen Controller (10) für einen Druckluftstrom, der auf dem proximalen Arm (2) stromaufwärts der Turbulenzkammer (4) angeordnet ist, wobei der Controller (10) umfasst:
- einen Stopfen oder Stift (11), der selektiv verschoben werden kann, um einen Zustromkanal (21) für Druckluft des proximalen Arms (2) zu verschließen, und
- ein Betätigungselement (12), das durch einen Bediener drehend betätigt werden kann,
wobei das Betätigungselement (12) und der Stopfen oder Stift (11) jeweilige Formkopplungsflächen (112, 121) umfasst,
wobei der Controller (10) eine Modulation der Flowrate zwischen einem Zustand einer minimalen Luftversorgung, welche vorzugsweise keinem Flow entspricht, und einem Zustand einer maximalen Luftversorgung erlaubt,
wobei die Vorrichtung (1) als ein Handstück eingerichtet ist, so dass sie durch einen Bediener an dem proximalen Arm (2) und/oder dem distalen Arm (3) festgehalten werden kann.

2. Vorrichtung (1) gemäß Anspruch 1, wobei der Stopfen oder Stift (11) einen Kopf (111) und einen Stiel (114) hat.

3. Vorrichtung (1) gemäß Anspruch 1 oder 2, wobei der Stopfen oder Stift (11) und/oder das Betätigungselement (12) eine jeweilige Formkopplungsfläche mit einem Nockenprofil oder einem im Wesentlichen sphärischen Profil hat.

4. Vorrichtung (1) gemäß einem der vorhergehenden Ansprüche, wobei das Betätigungselement (12) in Form eines Rings hergestellt ist, der drehbar mit einem äußeren Gehäuse (100) der Vorrichtung (1) gekoppelt ist.

5. Vorrichtung (1) gemäß einem der vorhergehenden Ansprüche, wobei das Betätigungselement (12) eine Formkopplungsfläche (121) hat, die eine geformte Führung ausbildet, insbesondere mit einem Nockenprofil, und wobei die Ausbildung derart ist, dass die Formkopplungsfläche (121) in Anlage an einen Kopf (111) des Stopfens oder Stifts (11) wirkt, insbesondere an einer geformten Oberfläche (112) des Stopfens oder Stifts (11).

6. Vorrichtung (1) gemäß einem der vorhergehenden Ansprüche umfassend Mittel zum Verteilen eines Wasserstrahls (7) mit einer oder mehreren Auslassdüsen an dem Endabschnitt (30) des distalen Arms (3).

7. Vorrichtung gemäß einem der vorhergehenden Ansprüche, wobei die Turbulenzkammer (4) eine Seitenladetür (40) hat, die eingerichtet ist zum Einsetzen des Schleifpulvers in die Kammer.

8. Vorrichtung (1) nach dem der vorhergehenden Anspruch, die eine solche Geometrie hat, dass die Turbulenzkammer (4) mit dem Schleifpulver ladbar ist, während die Vorrichtung (1) auf einer der Ladetür (40) gegenüberliegenden Seite (42) liegt, und vorzugsweise auf dem proximalen Arm (2) und dem distalen Arm (3) ruht.

9. Vorrichtung (1) gemäß Anspruch 7 oder 8, die eine Verschlusstür (5) der Seitenladetür (40) umfasst, wobei die Verschlusstür (5) vorzugsweise entfernbar ist.

10. Vorrichtung (1) gemäß dem der vorhergehenden Anspruch, wobei die Tür (5) mittels einer Schraubverbindung mit einem äußeren Gehäuse (100) der Vorrichtung (1) geöffnet und geschlossen werden kann, wobei die Tür (5) vorzugs-weise als Ring ausgebildet ist.

11. Vorrichtung (1) gemäß einem der vorhergehenden Ansprüche, wobei der proximale Arm (2) und der distale Arm (3) sich jeweils in vorherrschende Richtungen (DP, DD) erstrecken, vorzugsweise gegeneinander geneigt.

12. Vorrichtung gemäß einem der Ansprüche 7 bis 10 und gemäß Anspruch 11, wobei die Seitenladetür (40) derart eingerichtet ist, dass das Pulver gemäß einer Laderichtung (A) eingeführt werden kann, die im Wesentlichen senkrecht zu einer Ebene (P) ist, die durch die erste vorherrschende Richtung (DP) und die zweite vorherrschende Richtung (DD) definiert ist.

13. Vorrichtung (1) gemäß einem der vorhergehenden Ansprüche, wobei die Turbulenzkammer (4) ein seitliches Unterteil (400) hat, vorzugsweise mit einem zylindrischen Aufbau, das auf beiden Seiten durch eine entsprechende Basis oder Wand (41, 42) geschlossen ist.

14. Vorrichtung (1) gemäß dem vorhergehenden Anspruch, wobei die Turbulenzkammer (4) eine im Wesentlichen zylindrische Gesamtform hat.

15. Vorrichtung (1) gemäß einem der Ansprüche 13 oder 14, wobei eine oder beide der Basen oder Wände (41, 42) eine im Wesentlichen kuppelförmige Ausgestaltung haben.

16. Vorrichtung (1) gemäß einem der Ansprüche 7 bis 10 und gemäß einem der Ansprüche 11 bis 15, wobei die Seitenladetür (40) an einer der Basen oder Wände (41, 42) ausgebildet ist.

17. Vorrichtung (1) gemäß einem der vorhergehenden Ansprüche, wobei die Turbulenzkammer (4) einen transparenten Abschnitt (50) umfasst, der dazu eingerichtet ist, einem Benutzer einen Blick in das Innere zu erlauben.

## Revendications

1. Dispositif nettoyant en poudre (1) pour usage dentaire comprenant :
un bras proximal (2) configuré pour la fixation à une source d'air comprimé ;
un bras distal (3) ayant une partie d'extrémité distale (30) configurée pour distribuer un mélange d'air et de poudre abrasive ;
une chambre de turbulence (4) configurée pour recevoir la poudre abrasive, laquelle chambre de turbulence (4) est intercalée entre ledit bras proximal (2) et ledit bras distal (3) et en communication de fluide avec les deux de sorte que l'air comprimé peut être conduit dans la chambre de turbulence (4) à travers ledit bras proximal (2) et le mélange d'air et de poudre peut s'échapper à l'intérieur dudit bras distal (3) ;
un organe de commande (10) pour l'écoulement d'air comprimé, agencé sur ledit bras proximal (2) en amont de ladite chambre de turbulence (4), lequel organe de commande (10) comprend :
un bouchon ou broche (11) qui peut sélectivement effectuer une translation pour boucher un canal d'alimentation (21) d'air comprimé dudit bras proximal (2), et
un élément d'actionnement (12) pouvant être actionné en rotation par un opérateur,
dans lequel ledit élément d'actionnement (12) et ledit bouchon ou broche (11) comprennent des surfaces de couplage de forme (112, 121) respectives,
dans lequel ledit organe de commande (10) permet une modulation dudit débit entre une condition d'alimentation en air minimum, qui correspond de préférence à un débit nul, et une condition d'alimentation en air maximum,
lequel dispositif (1) est configuré sous la forme d'une pièce à main afin d'être saisi par un opérateur au niveau desdits bras proximal (2) et/ou distal (3).

2. Dispositif (1) selon la revendication 1, dans lequel ledit bouchon ou broche (11) a une tête (111) et une tige (114).

3. Dispositif (1) selon la revendication 1 ou 2, dans lequel ledit bouchon ou broche (11) et/ou ledit élément d'actionnement (12) ont une surface de couplage de forme respective avec un profil de came ou sensiblement sphérique.

4. Dispositif (1) selon l'une quelconque des revendications précédentes, dans lequel ledit élément d'actionnement (12) est réalisé sous la forme d'un anneau qui est couplé en rotation sur un boîtier externe (100) dudit dispositif (1).

5. Dispositif (1) selon l'une quelconque des revendications précédentes, dans lequel ledit élément d'actionnement (12) a une surface de couplage de forme (121) qui forme un guide profilé, en particulier avec un profil de came, et dans lequel la configuration est telle que ladite surface de couplage de forme (121) agit en butée sur une tête (111) dudit bouchon ou broche (11), en particulier sur une surface profilée (112) dudit bouchon ou broche (11).

6. Dispositif (1) selon l'une quelconque des revendications précédentes, comprenant des moyens pour distribuer un jet d'eau (7), ayant une ou plusieurs buses de sortie au niveau de ladite partie d'extrémité (30) dudit bras distal (3).

7. Dispositif selon l'une quelconque des revendications précédentes, dans lequel ladite chambre de turbulence (4) a une porte latérale de chargement (40) configurée pour l'insertion de la poudre abrasive dans la chambre elle-même.

8. Dispositif (1) selon la revendication précédente, ayant une géométrie de sorte que ladite chambre de turbulence (4) peut être chargée avec de la poudre abrasive avec le dispositif (1) reposant sur ledit côté opposé (42) à ladite porte de chargement (40) et de préférence sur lesdits bras proximal (2) et distal (3).

9. Dispositif (1) selon la revendication 7 ou 8, comprenant une porte de fermeture (5) de ladite porte latérale de chargement (40), laquelle porte de fermeture (5) est de préférence amovible.

10. Dispositif (1) selon la revendication précédente, dans lequel ladite porte (5) peut s'ouvrir et se fermer au moyen d'un couplage de vis avec un boîtier externe (100) du dispositif (1), ladite porte (5) étant de préférence configurée comme un anneau.

11. Dispositif (1) selon l'une quelconque des revendications précédentes, dans lequel lesdits bras proximal (2) et distal (3) s'étendent le long des directions prédominantes (DP, DD) respectives, de préférence mutuellement inclinées.

12. Dispositif selon l'une quelconque des revendications 7 à 10 et selon la revendication 11, dans lequel ladite porte latérale de chargement (40) est configurée de sorte que la poudre peut être insérée selon une direction de chargement (A) sensiblement orthogonale à un plan (P) défini par lesdites première (DP) et seconde (DD) directions prédominantes.

13. Dispositif (1) selon l'une quelconque des revendications précédentes, dans lequel ladite chambre de turbulence (4) a une jupe latérale (400), de préférence avec un développement cylindrique, fermée des deux côtés par une base ou paroi (41, 42) respective.

14. Dispositif (1) selon la revendication précédente, dans lequel ladite chambre de turbulence (4) a une forme globale sensiblement cylindrique.

15. Dispositif (1) selon la revendication 13 ou 14, dans lequel une ou les deux parmi lesdites bases ou parois (41, 42) ont sensiblement une conformation de dôme.

16. Dispositif (1) selon l'une quelconque des revendications 7 à 10 et selon l'une quelconque des revendications 11 à 15, dans lequel ladite porte latérale de chargement (40) est formée au niveau de l'une desdites bases ou parois (41, 42).

17. Dispositif (1) selon l'une quelconque des revendications précédentes, dans lequel ladite chambre de turbulence (4) comprend une partie transparente (50) configurée pour permettre à un opérateur de voir l'intérieur.
